(19) 

Europäisches Patentamt

European Patent Office

Office européen des brevets

(11) **EP 4 648 513 A1**

(12) **EUROPEAN PATENT APPLICATION**
published in accordance with Art. 153(4) EPC

(43) Date of publication:
**12.11.2025  Bulletin 2025/46**

(21) Application number: **24749520.3**

(22) Date of filing: **12.01.2024**

(51) International Patent Classification (IPC):
**H04W 72/0446** (2023.01)

(52) Cooperative Patent Classification (CPC):
**H04W 72/0446**

(86) International application number:
**PCT/CN2024/072083**

(87) International publication number:
**WO 2024/160039 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **03.02.2023  CN 202310124895**

(71) Applicants:
• **CHINA MOBILE COMMUNICATION CO., LTD RESEARCH INSTITUTE**
  **Beijing 100053 (CN)**
• **CHINA MOBILE COMMUNICATIONS GROUP CO., LTD.**
  **Beijing 100032 (CN)**

(72) Inventors:
• **MA, Liang**
  **Beijing 100053 (CN)**
• **JIN, Jing**
  **Beijing 100053 (CN)**
• **LOU, Mengting**
  **Beijing 100053 (CN)**
• **WANG, Yajuan**
  **Beijing 100053 (CN)**
• **ZHANG, Xiaozhou**
  **Beijing 100053 (CN)**
• **WANG, Qixing**
  **Beijing 100053 (CN)**

(74) Representative: **Hertin und Partner**
  **Rechts- und Patentanwälte PartG mbB**
  **Kurfürstendamm 63**
  **10707 Berlin (DE)**

(54) **TARGET PERCEPTION METHOD, SENDING DEVICE, RECEIVING DEVICE AND STORAGE MEDIUM**

(57)     A target sensing method, a transmitting device, a receiving device, and a storage medium are provided. The target sensing method applied to a transmitting device includes: configuring a first reference signal, where among frequency-domain resources occupied by the first reference signal, a spacing between at least one group of adjacent resource units is different from a spacing between other adjacent resource units; and transmitting the first reference signal to a to-be-sensed target.

Configuring a first reference signal, where among frequency-domain resources occupied by the first reference signal, a spacing between at least one group of adjacent resource units is different from a spacing between other adjacent resource units — S101

Transmitting the first reference signal to a to-be-sensed target — S102

Fig. 1

# Description

## CROSS-REFERENCE TO RELATED APPLICATION

The present application is based on and claims a priority to the Chinese patent application No. 202310124895.9 filed on February 3, 2023, a disclosure of which is incorporated herein by reference in its entirety.

## TECHNICAL FIELD

Embodiments of the present application relate to the field of communication technology, in particular to a target sensing method, a transmitting device, a receiving device, and a storage medium.

## BACKGROUND

For next-generation communication networks, the communication spectrum is evolving into higher frequency bands such as millimeter-wave, terahertz, and the like, leading to increasing overlap between the communication spectrum and the traditional sensing spectrum, enabling their integrated design. Integrated Sensing and Communication refers to the fusion of communication and sensing functions, allowing future communication systems to have both communication and sensing functions to simultaneously perform information transmission and complete the detection, tracking, recognition, imaging, and the like of targets or environments to obtain position, distance, velocity, among other information. Compared with existing positioning technologies, Integrated Sensing and Communication technology can achieve more precise sensing and positioning in some scenarios and can sense both networked and non-networked objects.

In sensing based on orthogonal frequency division multiplexing waveforms of existing communication systems, the ranging accuracy $\Delta R$ is linearly inversely proportional to $\Delta f'$, while the maximum ranging range $R_{max}$ is also linearly inversely proportional to $\Delta f'$. $\Delta f'$ is the spacing between subcarriers occupied by signals for sensing, i.e., $\Delta f' = n\Delta f$, where $\Delta f$ is the subcarrier spacing in a parameter set. For example, in a system with a subcarrier spacing $\Delta f = 15$kHz, if a Comb-2 frequency-domain configuration is adopted (i.e., modulation symbols are mapped only to odd- or even-numbered subcarriers), $\Delta f' = 2\Delta f = 30$kHz. Assuming that the number of subcarriers for sensing remains unchanged, when a sparse frequency-domain configuration is used, $\Delta f'$ is large, the ranging accuracy is high, but the maximum ranging range is small. When a dense frequency-domain configuration is adopted, $\Delta f'$ is small, the maximum ranging range is large, but the ranging accuracy is low. Consequently, it is challenging to ensure both a high ranging accuracy and a large ranging range, resulting in significant sensing errors and low time-frequency resource utilization.

## SUMMARY

To at least partially solve the above-mentioned problem, embodiments of the present application provide a target sensing method, a transmitting device, a receiving device, and a storage medium.

Technical solutions in the embodiments of the present application are implemented below.

The present application provides in some embodiments a target sensing method, performed by a transmitting device, including:

configuring a first reference signal, where among frequency-domain resources occupied by the first reference signal, a spacing between at least one group of adjacent resource units is different from a spacing between other adjacent resource units; and transmitting the first reference signal to a to-be-sensed target.

In an embodiment, the configuring the first reference signal includes:

configuring N sub-signals or configuring N resources from a resource set of the first reference signal to constitute the first reference signal, where N is a natural number greater than 1, where among the N sub-signals/resources constituting the first reference signal, at least one of the following characteristics is present:

different comb values;
different starting positions; or
different lengths.

In an embodiment, the configuring the N sub-signals or configuring the N resources from the resource set of the first reference signal includes:

generating a long reference signal sequence, and truncating the long reference signal sequence to obtain N segments; and mapping different segments in the N segments to different sub-signals/resources in the N sub-signals/resources; or generating N reference signal sequences with different sequence parameters; and mapping different reference signal sequences in the N reference signal sequences to different sub-signals/resources in the N sub-signals/resources.

In an embodiment, the transmitting the first reference signal to the to-be-sensed target includes: transmitting the N sub-signals/resources within the same time unit.

In an embodiment, the N sub-signals/resources are separated or interleaved in the frequency domain.

In an embodiment, the method further includes:

transmitting first information to a receiving device, where the first information includes at least one of the following information:

> an identifier indicating a configuration manner of the first reference signal;
> an initialization parameter used for configuring a reference signal sequence generated for the first reference signal; or
> at least one of time-domain resource information of the first reference signal, frequency-domain resource information of the first reference signal, or generation information of the reference signal sequence.

In an embodiment, the method further includes:

> configuring the first reference signal in a case that second information meets a preset condition, where the second information includes at least one of the following information:
>
> > an initial sensing result of the to-be-sensed target determined using a second reference signal;
> > a sensing requirement with respect to the to-be-sensed target; or
> > whether a time-frequency resource configuration of the second reference signal meets the sensing requirement.

In an embodiment, the method further includes:

> transmitting the second reference signal to the to-be-sensed target, and transmitting the time-frequency resource configuration of the second reference signal to a receiving device; and
> receiving the second information transmitted by the receiving device.

In an embodiment, the method further includes: transmitting a time-frequency resource configuration of the first reference signal to an adjacent device to enable the adjacent device to perform signal transmission on orthogonal resources.

The present application provides in some embodiments a target sensing method, performed by a receiving device, including:

> receiving a first sensing signal, where the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units; and
> performing sensing processing on the first sensing signal to determine a target sensing result of the to-be-sensed target.

In an embodiment, in a case that the receiving device is the to-be-sensed target, the first sensing signal is the first reference signal; and
in a case that the receiving device is different from the to-be-sensed target, the first sensing signal is an echo signal formed by reflection of the first reference signal by the to-be-sensed target.

In an embodiment, the first reference signal is constituted by N sub-signals/resources; and
where among the N sub-signals/resources, at least one of the following characteristics is present:

> different comb values;
> different starting positions; or
> different lengths.

In an embodiment, the method further includes:

> receiving first information transmitted by the transmitting device,
> where the first information includes at least one of the following information:
>
> > an identifier indicating a configuration manner of the first reference signal;
> > an initialization parameter used for configuring a reference signal sequence generated for the first reference signal; or
> > at least one of time-domain resource information of the first reference signal, frequency-domain resource information of the first reference signal, or generation information of the reference signal sequence.

In an embodiment, the performing the sensing processing on the first sensing signal to determine the target sensing result of the to-be-sensed target includes:

> determining a sensing processing manner using the first information; and
> performing the sensing processing on the first sensing signal based on the determined sensing processing manner to obtain the target sensing result.

In an embodiment, the method further includes:

> transmitting second information to the transmitting device for the transmitting device to configure the first reference signal in a case that the second information meets a preset condition,
> where the second information includes at least one of the following information:
>
> > an initial sensing result of the to-be-sensed target determined using a second reference signal;
> > a sensing requirement with respect to the to-be-sensed target; or

whether a time-frequency resource configuration of the second reference signal meets the sensing requirement.

In an embodiment, the method further includes:

receiving a second sensing signal that originates from the second reference signal and the time-frequency resource configuration of the second reference signal transmitted by the transmitting device, where the second reference signal is transmitted by the transmitting device to the to-be-sensed target; performing sensing processing on the second sensing signal to determine the initial sensing result of the to-be-sensed target; and determining the second information based on the initial sensing result and the time-frequency resource configuration of the second reference signal.

In an embodiment, in a case that the receiving device is the to-be-sensed target, the second sensing signal is the second reference signal; and in a case that the receiving device is different from the to-be-sensed target, the second sensing signal is an echo signal formed by reflection of the second reference signal by the to-be-sensed target.

The present application provides in some embodiments a transmitting device, including:

a signal configuration module, configured to configure a first reference signal, where among frequency-domain resources occupied by the first reference signal, a spacing between at least one group of adjacent resource units is different from a spacing between other adjacent resource units; and a first communication module, configured to transmit the first reference signal to a to-be-sensed target.

The present application provides in some embodiments a receiving device, including:

a second communication module, configured to receive a first sensing signal, where the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units; and a sensing processing module, configured to perform sensing processing on the first sensing signal to determine a target sensing result of the to-be-sensed target.

The present application provides in some embodiments a transmitting device, including: a first processor, a first memory, and a first communication bus,

where the first communication bus is configured to implement a communication connection between the first processor and the first memory; and the first processor is configured to perform one or more computer programs stored in the first memory to implement the foregoing target sensing method applied to the transmitting device.

The present application provides in some embodiments a receiving device, including: a second processor, a second memory, and a second communication bus,

where the second communication bus is configured to implement a communication connection between the second processor and the second memory; and the second processor is configured to perform one or more computer programs stored in the second memory to implement the foregoing target sensing method applied to the receiving device.

The present application provides in some embodiments a computer-readable storage medium, having a computer program stored therein, where the computer program, when executed by a processor, implements the foregoing target sensing method.

A target sensing method, a transmitting device, a receiving device, and a storage medium are provided in the embodiments of the present application. The target sensing method applied to a transmitting device includes: configuring a first reference signal, where among frequency-domain resources occupied by the first reference signal, a spacing between at least one group of adjacent resource units is different from a spacing between other adjacent resource units; and transmitting the first reference signal to a to-be-sensed target. In the technical solutions provided in the embodiments of the present application, because among the frequency-domain resources occupied by the first reference signal, the spacing between the at least one group of adjacent resource units is different from the spacing between other adjacent resource units, frequency-domain resource occupation is irregular, in which a sparse part can achieve a high ranging accuracy and a dense part can achieve a large ranging range, so that the trade-off between a ranging accuracy and a ranging range can be optimized, thereby reducing sensing errors, and overhead can be reduced with sensing performance remaining unchanged, thereby improving time-frequency resource utilization.

**BRIEF DESCRIPTION OF THE DRAWINGS**

Fig. 1 is a schematic flowchart of a target sensing method according to an embodiment of the present application;

Fig. 2 is a schematic diagram of exemplary time-frequency resource occupation according to an embodiment of the present application;

Fig. 3 is another schematic flowchart of a target sensing method according to an embodiment of the present application;

Fig. 4 is still another schematic flowchart of a target sensing method according to an embodiment of the present application;

Fig. 5 is another schematic diagram of exemplary time-frequency resource occupation according to an embodiment of the present application;

Fig. 6 is a schematic diagram of an exemplary interleaved frequency-domain mapping according to an embodiment of the present application;

Fig. 7 is another schematic diagram of an exemplary interleaved frequency-domain mapping according to an embodiment of the present application;

Fig. 8 is a schematic diagram of an exemplary frequency-domain resource configuration according to an embodiment of the present application;

Fig. 9 is a curve diagram of an exemplary sensing error according to an embodiment of the present application;

Fig. 10 is a schematic structural diagram of a transmitting device according to an embodiment of the present application;

Fig. 11 is another schematic structural diagram of a transmitting device according to an embodiment of the present application;

Fig. 12 is a schematic structural diagram of a receiving device according to an embodiment of the present application;

Fig. 13 is another schematic structural diagram of a receiving device according to an embodiment of the present application.

## DETAILED DESCRIPTION

To make the objectives, technical solutions, and advantages of the present application more comprehensible, the present application is further described below in detail with reference to the accompanying drawings and embodiments. It should be understood that the specific embodiments described herein are merely used to describe the present application rather than limiting the present application.

The technical solutions of the present application and how to resolve the foregoing technical problems in the technical solutions of the present application are described below in detail with reference to the embodiments and the accompanying drawings. The following embodiments may be combined with each other, and a same or similar concept or process may not be described repeatedly in some embodiments.

In addition, the technical solutions recorded in the embodiments of the present application can be combined with each other in any combination without conflict.

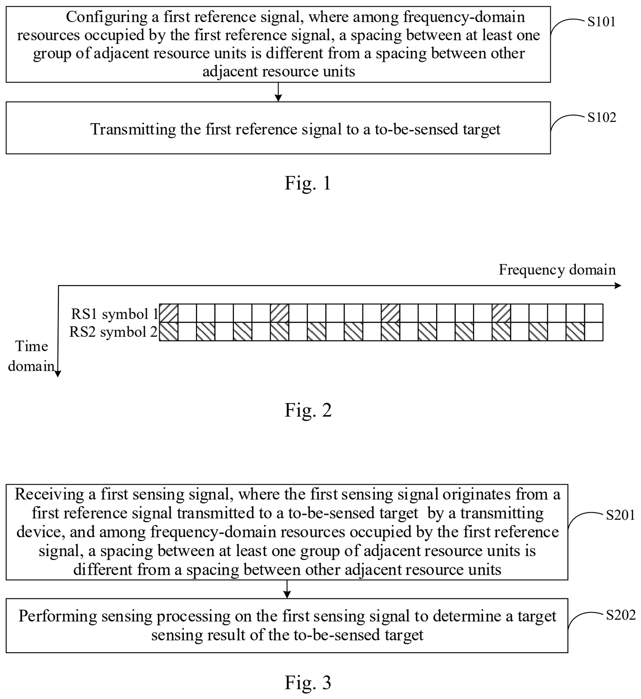

The present application provides in some embodiments a target sensing method, performed by a transmitting device. The transmitting device may be specifically a base station, or may be a terminal or another electronic device. This is not limited in the embodiments of the present application. Fig. 1 is a schematic flowchart of a target sensing method according to an embodiment of the present application. As shown in Fig. 1, in the embodiments of the present application, the target sensing method performed by the transmitting device includes the following steps.

S101 includes: configuring a first reference signal, where among frequency-domain resources occupied by the first reference signal, a spacing between at least one group of adjacent resource units is different from a spacing between other adjacent resource units.

In the embodiments of the present application, the transmitting device configures the first reference signal. Among the frequency-domain resources occupied by the first reference signal, a spacing between at least one group of adjacent resource units is different from a spacing between other adjacent resource units.

In the embodiments of the present application, that the transmitting device configures the first reference signal includes: configuring N sub-signals or configuring N resources from a resource set of the first reference signal to constitute the first reference signal, where N is a natural number greater than 1, where among the N sub-signals/resources constituting the first reference signal, at least one of the following characteristics is present:

    different comb values;
    different starting positions; or
    different lengths.

It should be noted that in the embodiments of the present application, the foregoing defined characteristics among the N sub-signals/resources may make the spacing between at least one group of adjacent resource units different from the spacing between other adjacent resource units among the frequency-domain resources occupied by the first reference signal, so that the frequency-domain resource occupation of the first reference signal is irregular. The adjacent resource units may be adjacent subcarriers or adjacent resource elements (REs).

In the embodiments of the present application, that the transmitting device configures the N sub-signals or configures the N resources from the resource set of the first reference signal includes: generating a long reference signal sequence, and truncating the long reference signal sequence to obtain N segments; and mapping different segments in the N segments to different sub-signals/resources in the N sub-signals/resources; or generating N reference signal sequences with different sequence parameters; and mapping different reference signal sequences in the N reference signal sequences to different sub-signals/resources in the N sub-signals/resources.

In the embodiments of the present application, the N sub-signals/resources constituting the first reference signal are separated or interleaved in the frequency domain. Compared with other configuration manners, resource overhead can be reduced with the condition of the sensing performance remaining unchanged being met, thereby improving time-frequency resource utilization.

In the embodiments of the present application, after configuring the first reference signal, the transmitting device may further perform the following step: transmitting first information to a receiving device,
where the first information includes at least one of the following information:

an identifier indicating a configuration manner of the first reference signal;
an initialization parameter used for configuring a reference signal sequence generated for the first reference signal; or
at least one of time-domain resource information of the first reference signal, frequency-domain resource information of the first reference signal, or generation information of the reference signal sequence.

It should be noted that in the embodiments of the present application, the identifier indicating the configuration manner of the first reference signal may be specifically a sequence number corresponding to the configuration manner. For the initialization parameter used for configuring the reference signal sequence generated for the first reference signal, for example, configuring two sub-signals, an initial value of a sequence of the two sub-signal may be used as the foregoing initialization parameter. Alternatively, the first reference signal is configured in the manner of truncating a plurality of segments from the long reference signal sequence and mapping the segments to the N sub-signals, and a sensing-specific initial value may be selected for the long reference signal sequence as the foregoing initialization parameter.

It should be noted that in the embodiments of the present application, the receiving device is configured to determine the target sensing result of the target to be sensed. The target sensing result of the target to be sensed determined by the receiving device needs to be applied to the first sensing signal that originates from the first reference signal. The receiving device and the transmitting device may be different devices. Based on this, the transmitting device may provide the first information to the receiving device for the receiving device to explicitly determine the sensing processing manner that needs to be used to determine the target sensing result of the target to be sensed.

It should be noted that in the embodiments of the present application, the receiving device and the transmitting device may alternatively be the same device, i.e., the transmitting device may also determine the target sensing result of the target to be sensed. In this case, the transmitting device actually does not need to transmit the first information. A first echo signal formed by reflection of the first reference signal by the target to be sensed may be received, and sensing processing is performed on the first echo signal. In this scenario, the transmitting device does not need to transmit the first information, and can determine the sensing processing manner based on the first information to perform the sensing processing.

It should be noted that in the embodiments of the present application, if the first reference signal is configured in the foregoing sequence mapping manner, the sequence mapping manner may alternatively be indicated in the first information. The foregoing sequence mapping manner may be used as a subordinate characteristic of the first reference signal, and is not directly related to the specific irregularity of the frequency-domain resource occupation of the first reference signal. Certainly, the first information may alternatively include other information that is related to the first reference signal and may be used for determining the sensing processing manner. This is not limited in the embodiments of the present application.

It should be noted that in the embodiments of the present application, the transmitting device may configure the first reference signal under a specific condition for target sensing. Details are described below.

In the embodiments of the present application, the transmitting device may configure the first reference signal in a case that second information meets a preset condition,
where the second information includes at least one of the following information:

an initial sensing result of the to-be-sensed target determined using a second reference signal;
a sensing requirement with respect to the to-be-sensed target; or
whether a time-frequency resource configuration of the second reference signal meets the sensing requirement.

In the embodiments of the present application, the transmitting device may perform the following steps to obtain the second information: transmitting the second reference signal to the to-be-sensed target, and transmitting the time-frequency resource configuration of the second reference signal to a receiving device to determine the second information through the receiving device; and receiving the second information transmitted by the receiving device.

It should be noted that in the embodiments of the present application, the second reference signal and the first reference signal may be different reference signals. The transmitting device may obtain the initial sensing result of the to-be-sensed target determined using the second reference signal. For example, in a distance sensing scenario, the initial sensing result is a distance estimation value of 100 m.

It should be noted that in the embodiments of the present application, in the distance sensing scenario, the sensing requirement includes, but is not limited to, a ranging accuracy, a maximum ranging range, and the number of targets to be sensed. A specific sensing requirement may be set according to an actual requirement and application scenario. This is not limited in the embodiments of the present application.

It should be noted that in the embodiments of the present application, the transmitting device configures the first reference signal in a case that second information meets the preset condition. In addition, the transmitting device may alternatively select another manner based on the second information to configure another reference signal and transmit the reference signal to the to-be-sensed target for target sensing. The transmitting device may actually select and configure a specific reference signal from the following three configuration manners based on the second information:

Configuration 1 includes: configuring one sensing reference signal, and transmitting the sensing reference signal on one time unit, for example, on one symbol.
Configuration 2 includes: configuring N sensing reference signals, and transmitting the N sensing reference signals on a plurality of time units respectively. The N sensing reference signals have different frequency-domain resource occupation patterns, comb values, and the like. One time unit may carry one or more reference signals. For example, as shown in Fig. 2, in the time-frequency resource occupation pattern, two sensing reference signals RS1 and RS2 are configured and are transmitted on two symbols.
Configuration 3 includes: configuring a first reference signal. For related content of a specific configuration manner and N sub-signals/resources constituting the first reference signal, details have been described and are not described herein again.

It may be understood that in the embodiments of the present application, for the first reference signal configured according to Configuration 3, because among the frequency-domain resources occupied by the first reference signal, the spacing between the at least one group of adjacent resource units is different from the spacing between other adjacent resource units, frequency-domain resource occupation is irregular, in which a sparse part can achieve a high ranging accuracy and a dense part can achieve a large ranging range, so that the trade-off between a ranging accuracy and a ranging range can be optimized, thereby reducing sensing errors.

In the embodiments of the present application, after configuring the first reference signal, the transmitting device may further perform the following step: transmitting a time-frequency resource configuration of the first reference signal to an adjacent device to enable the adjacent device to perform signal transmission on orthogonal resources.

It may be understood that in the embodiments of the present application, the transmitting device may be one base station, and the adjacent device may be a base station of a neighboring cell. Adjacent devices can reduce mutual communication interference by performing signal transmission on orthogonal resources.

S102 includes: transmitting the first reference signal to a to-be-sensed target.

In the embodiments of the present application, after configuring the first reference signal, the transmitting device may transmit the first reference signal to a to-be-sensed target to perform target sensing.

It should be noted that in the embodiments of the present application, the to-be-sensed target is a specific object, and may be a specific article, for example, a vehicle, a mobile phone, or the like, or may be a specific person. The to-be-sensed target may be set according to an actual requirement and application scenario. This is not limited in the embodiments of the present application.

In the embodiments of the present application, as described in the foregoing step S101, the first reference signal is constituted by the N sub-signals/resources, and that the transmitting device transmits the first reference signal to the to-be-sensed target includes: transmitting the N sub-signals/resources within the same time unit.

The present application provides in some embodiments a target sensing method, applied to a receiving device. The receiving device may be specifically a base station, or may be a terminal or another electronic device. This is not limited in the embodiments of the present application. Fig. 3 is another schematic flowchart of a target sensing method according to an embodiment of the present application. As shown in Fig. 3, in the embodiments of the present application, the target sensing method applied to the receiving device includes the following steps.

S201 includes: receiving a first sensing signal, where the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units.

In the embodiments of the present application, the receiving device may receive the first sensing signal, where the first sensing signal originates from the foregoing first reference signal.

In the embodiments of the present application, in a case that the receiving device is the to-be-sensed target, the first sensing signal is the first reference signal;

and in a case that the receiving device is different from the to-be-sensed target, the first sensing signal is an echo signal formed by reflection of the first reference signal by the to-be-sensed target.

It may be understood that in the embodiments of the present application, the to-be-sensed target and the receiving device may be the same object or may be different objects. The first sensing signal varies for different cases.

In an embodiment of the present application, the first reference signal is constituted by N sub-signals/-resources; and

where among the N sub-signals/resources, at least one of the following characteristics is present:

different comb values;
different starting positions; or
different lengths.

It should be noted that in the embodiments of the present application, among the N sub-signals/resources constituting the first reference signal, at least one of the foregoing characteristics is present, making the spacing between at least one group of adjacent resource units different from the spacing between other adjacent resource units among the frequency-domain resources occupied by the first reference signal.

In the embodiments of the present application, as described in the foregoing target sensing method applied to the transmitting device, the transmitting device configures the first reference signal in a case that second information meets the preset condition, and the second information may be provided by the receiving device. Based on this, before performing the step S201, i.e., before receiving the first sensing signal, the receiving device may further perform the following step: transmitting second information to the transmitting device for the transmitting device to configure the first reference signal in a case that the second information meets a preset condition, where the second information includes at least one of the following information:

an initial sensing result of the to-be-sensed target determined using a second reference signal;
a sensing requirement with respect to the to-be-sensed target; or
whether a time-frequency resource configuration of the second reference signal meets the sensing requirement.

In the embodiments of the present application, before transmitting the second information to the transmitting device, the receiving device may further perform the following steps: receiving a second sensing signal that originates from the second reference signal and the time-frequency resource configuration of the second reference signal transmitted by the transmitting device, where the second reference signal is transmitted by the transmitting device to the to-be-sensed target; performing sensing processing on the second sensing signal to determine the initial sensing result of the to-be-sensed target; and determining the second information based on the initial sensing result and the time-frequency resource configuration of the second reference signal.

It should be noted that in the embodiments of the present application, the second information originates from the initial sensing result of the to-be-sensed target determined using the second reference signal and the time-frequency resource configuration of the second reference signal, where the second reference signal is transmitted by the transmitting device to the to-be-sensed target, the receiving device receives the second information that originates from the second reference signal to determine the initial sensing result, and the time-frequency resource configuration of the second reference signal is directly provided to the receiving device by the transmitting device.

It should be noted that in the embodiments of the present application, the foregoing interaction between the transmitting device and the receiving device is implemented in a case that the transmitting device and the receiving device are different devices. If the transmitting device and the receiving device are the same device, interaction is not required, and the device may directly obtain various information.

It should be noted that in the embodiments of the present application, similar to the foregoing first sensing signal, in a case that the receiving device is the to-be-sensed target, the second sensing signal is the second reference signal; and in a case that the receiving device is different from the to-be-sensed target, the second sensing signal is an echo signal formed by reflection of the second reference signal by the to-be-sensed target.

S202 includes: performing sensing processing on the first sensing signal to determine a target sensing result of the to-be-sensed target.

In the embodiments of the present application, in a case that the receiving device receives the first sensing signal, the sensing processing may be performed on the first sensing signal to determine the target sensing result of the to-be-sensed target.

In the embodiments of the present application, before the receiving device performs the sensing processing on the first sensing signal to determine the target sensing result of the to-be-sensed target, the following step may further be performed: receiving first information transmitted by the transmitting device, where the first information includes at least one of the following information:

an identifier indicating a configuration manner of the first reference signal;
an initialization parameter used for configuring a reference signal sequence generated for the first reference signal; or
at least one of time-domain resource information of the first reference signal, frequency-domain resource information of the first reference signal, or generation information of the reference signal sequence.

It should be noted that in the embodiments of the present application, the first information actually reflects the characteristic of the first reference signal.

In the embodiments of the present application, that the receiving device performs the sensing processing on the first sensing signal to determine the target sensing result of the to-be-sensed target includes: determining a sensing processing manner using the first information; and performing the sensing processing on the first sensing signal based on the determined sensing processing manner to obtain the target sensing result.

It may be understood that in the embodiments of the present application, the receiving device may select a corresponding sensing processing manner based on the first information to perform the sensing processing on the first sensing signal. Refer to the foregoing three configuration manners. In the sensing processing manner corresponding to Configuration 1, signal processing needs to be performed on only one signal to obtain the target sensing result. In the sensing processing manners corresponding to Configuration 2 and Configuration 3, signal processing needs to be performed on a plurality of signals/sub-signals respectively, and then joint estimation is performed to obtain a final target sensing result. For example, if the first information includes the identifier indicating the configuration manner of the first reference signal, a sensing processing manner, i.e., joint sensing processing, may be directly selected through the identifier, or, if the initialization parameter included in the first information is initial values of two sequences, it may indicate through the two initial values that joint sensing processing needs to be performed.

It should be noted that in the embodiments of the present application, the receiving device and the transmitting device may be different devices, and the receiving device may receive the first information provided by the transmitting device and determine the sensing processing manner using the first information. Certainly, the receiving device and the transmitting device may be the same device. In this case, the receiving device may actually obtain first information independently, and the foregoing process of transmitting and receiving the first information does not need to be performed.

It should be noted that in the embodiments of the present application, if the receiving device is a terminal, after determining the target sensing result, the receiving device may further report the target sensing result and/or other information to a network side.

It may be understood that in the embodiments of the present application, because among the frequency-domain resources occupied by the first reference signal, the spacing between the at least one group of adjacent resource units is different from the spacing between other adjacent resource units, frequency-domain resource occupation is irregular, in which a sparse part can achieve a high ranging accuracy and a dense part can achieve a large ranging range. Therefore, target sensing implemented based on the reference signal can optimize the trade-off between a ranging accuracy and a ranging range, thereby reducing sensing errors.

Related examples are described below in detail based on the foregoing target sensing manner.

A first example mainly uses a solution of configuring a reference signal different from the foregoing first reference signal to implement target sensing, and mainly includes the following steps:

S1 includes: transmitting, by a first base station, a reference signal RS0 (the second reference signal) to a to-be-sensed target, where a frequency-domain configuration of RS0 is in a Comb-2 form, occupying 240 REs. A second base station receives an echo signal of RS0 formed by reflection by the to-be-sensed target and performs sensing processing to obtain that the to-be-sensed target is at a distance of 100 m. In addition, it is obtained that only a sensing ranging accuracy of approximately 3 m can be achieved based on the frequency-domain configuration information of RS0, failing to meet a high-accuracy sensing requirement.

S2 includes: generating and transmitting, by the second base station, information [1, 200] (the second information) to the second base station, where the information indicates that the to-be-sensed target requires a ranging accuracy of 1 m, and a maximum ranging range is 200 m.

S3 includes: selecting, by the first base station, Configuration 1 based on the information [1, 200], configuring a subcarrier spacing of 120 kHz, performing resource mapping on 240 REs using a frequency-domain configuration of Comb-6, and transmitting one configured sensing reference signal.

For a frequency-domain mapping manner of Comb-6, a corresponding equivalent subcarrier spacing is $\Delta f' = 6\Delta f = 720\text{kHz}$, and $\Delta f$ is a subcarrier spacing in a parameter set. It be may obtained that the maximum ranging range is:

$$R_{\max} = \frac{c}{2\Delta f'} = \frac{3\times10^8}{2\times720\times10^3} = 208\text{m}$$

, c is the speed of light, the ranging accuracy is

$$\Delta R =$$

$$\frac{c}{2K\Delta f'} = \frac{3\times10^8}{2\times240\times720\times10^3} = 0.87\text{m}$$

, and K is the number of occupied REs. Based on the foregoing calculation, it may be determined that a high-accuracy sensing requirement with the ranging accuracy of 1 m and the maximum ranging range of 200 m is met.

S4 includes: transmitting, by the first base station, information [01] to the second base station, indicating Configuration 1 selected by the first base station, where the information may further include time-frequency-domain position information, generation information of the reference signal sequence, and the like of the second reference signal.

S5 includes: receiving, by the second base station, an echo signal formed by reflection of one sensing reference signal configured in the step S3 by the to-be-sensed target, selecting a sensing processing method corresponding to Configuration 1 based on the information [01] to perform sensing, and reporting sensing information to the first base station through an uplink data channel.

It should be noted that the sensing processing method corresponding to Configuration 1 does not require joint sensing processing, and a distance estimation value of the to-be-sensed target is obtained according to Formula $R_{est} = \dfrac{index \times c}{K\Delta f'}$ , where index denotes an index corresponding to a peak value in the delay domain.

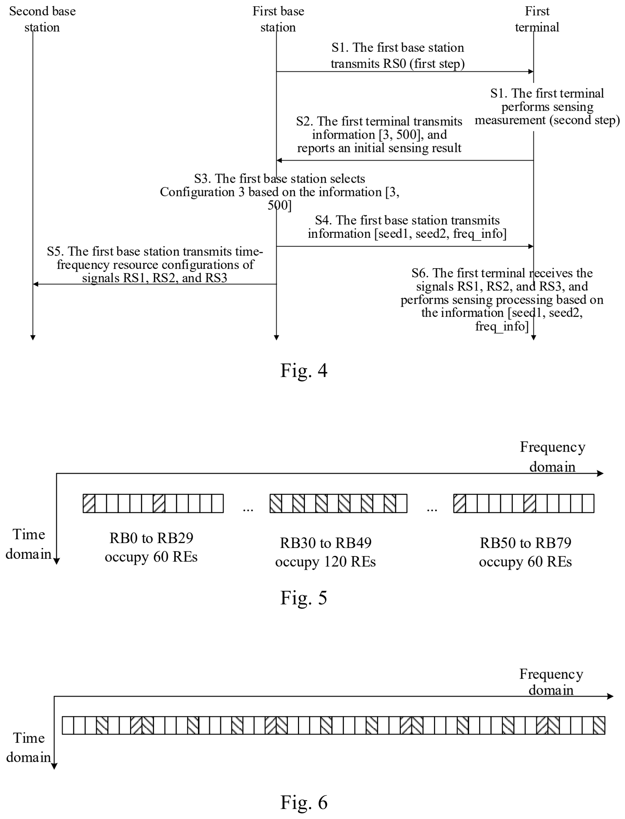

A second example mainly uses a solution of configuring the foregoing first reference signal to implement target sensing, and referring to Fig. 4, mainly includes the following steps:

S1 includes: transmitting, by the first base station, RS0 (the second reference signal) and time-frequency-domain configuration information of RS0, and receiving, by a first terminal (the receiving device is the to-be-sensed target), RS0. The first terminal performs sensing measurement to obtain that the first base station is at a distance of 450 m. In addition, it is obtained that only a sensing ranging accuracy of approximately 5 m can be achieved based on the frequency-domain configuration information of RS0.

S2 includes: transmitting, by the first terminal, information [3, 500] (the second information) to the first base station, where the information indicates that the first terminal requires a ranging accuracy of 3 m and a ranging range of 500 m.

S3 includes: configuring, by the first base station, a subcarrier spacing of 120 kHz, and selecting Configuration 3 based on the sensing requirement in the information [3, 500] to perform resource mapping.

Configuration 3 includes: configuring, by the first base station, frequency-domain resources of three sub-signal RS1, RS2, and RS3 (the first reference signal), used for constituting the first reference signal shown in Fig. 5, where one resource block (RB) includes 12 REs. The first base station generates a sequence 1 (an initial value is seed1) with a length of 120, and maps the sequence 1 in segments to the frequency-domain resources of RS1 and RS3; and generates a sequence 2 (an initial value is seed2) with a length of 120, and maps the sequence 2 to the frequency-domain resources of RS2. After completing resource mapping, the first base station performs transmission on a symbol S.

Referring to Fig. 5, an equivalent subcarrier spacing corresponding to RS2 is $\Delta f'_2 = 2\Delta f = 240$kHz. REs that meet Comb-6 are taken from all the frequency-domain resources corresponding to RS1, RS2, and RS3, and an equivalent subcarrier spacing is $\Delta f' = 6\Delta f = 720$kHz. Based on $\Delta f'_2$ , it may be obtained that the maximum ranging range is

$$R_{max1} = \frac{c}{2\Delta f'_2} = \frac{3 \times 10^8}{480 \times 10^3} = 625\text{m}$$ , meeting a

requirement with the maximum ranging range of 300 m. Based on $\Delta f'$, it may be obtained that the ranging accuracy is $\Delta R = \frac{c}{K\Delta f'} = \frac{3 \times 10^8}{160 \times 720 \times 10^3} = 2.6\text{m}$ , meeting a requirement with the ranging accuracy of 3 m, where K is the number of the taken REs that meet Comb-6.

S4 includes: transmitting, by the first base station, information [seed1, seed2, freq_info] (the first information) to the first terminal, where [seed1], seed2] represents initial values of the foregoing two sequences, and [freq_info] represent s related frequency-domain resource information.

S5 includes: transmitting, by the first base station, time-frequency resource configurations of RS1, RS2, and RS3 to a neighboring second base station, and configuring, by the second base station based on the time-frequency resource configurations of RS1, RS2, and RS3, resources orthogonal to the time-frequency resource configurations to perform signal transmission.

S6 includes: receiving, by the first terminal, the signals RS1, RS2, and RS3, and selects a sensing processing method corresponding to Configuration 3 based on [seed1, seed2] to perform sensing.

The sensing processing method corresponding to Configuration 3 needs to use a plurality of sensing reference signals to perform sensing parameter measurement and then perform joint processing on results of the sensing parameter measurement. For example, details are provided below:

Joint signal processing is performed on transmitting and receiving sequences of RS2 using an orthogonal frequency division multiplexing (OFDM) sensing algorithm to obtain that the distance estimation value of the to-be-sensed target is $R_{est2} = \frac{index2 \times c}{2K\Delta f_2'}$ . Joint signal processing is performed on corresponding transmitting and receiving signals on resources that meet Comb-6 in RS1, RS3, and RS2 to obtain that the distance estimation value of the to-be-sensed target is

$$R_{est} = \frac{index \times c}{2K\Delta f'}$$ . Based on the foregoing two distance estimation values, a final target distance estimation value, i.e., the target sensing result, is obtained:

$$R_{est\_final} = R_{est} + \left\lfloor \frac{R_{est2}}{R_{max2}} \right\rfloor \times R_{max}.$$

$$R_{max2} = \frac{c}{2\Delta f'}$$ is a maximum measurement distance corresponding to all the frequency-domain resources occupied by RS1, RS2, and RS3.

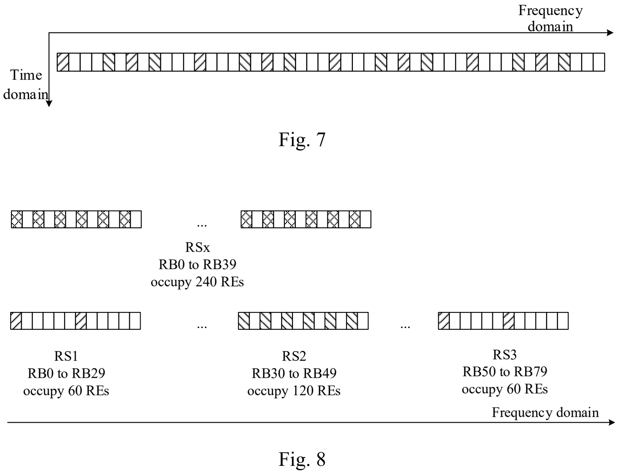

For Configuration 3, in addition to a non-interleaved resource mapping manner in Fig. 5, according to different requirements and available time-frequency resources, frequency-domain configurations of a plurality of reference signals may also be interleaved, as shown in Fig. 6 and Fig. 7.

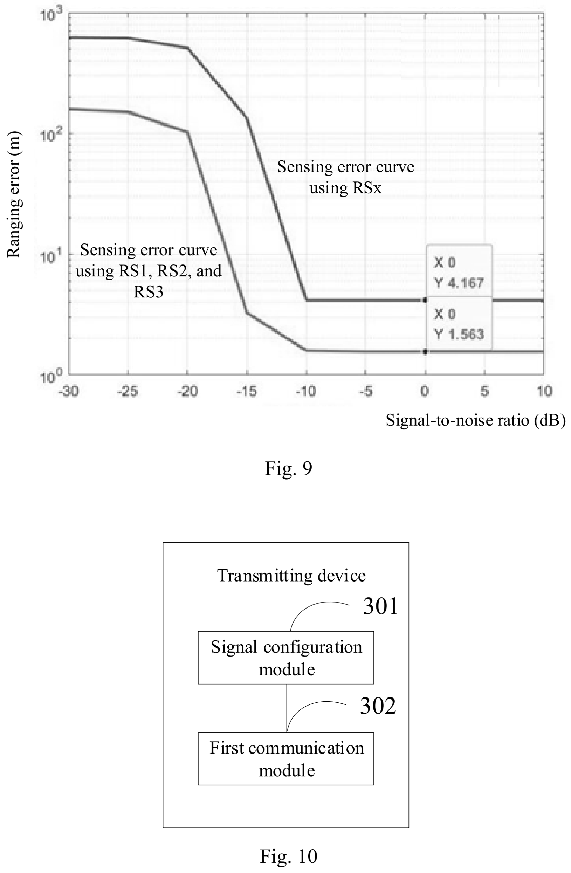

For the foregoing solution, link simulation is performed using the frequency-domain resource configuration shown in Fig. 8. Simulation results are shown in Fig. 9. As shown in Fig. 8, a reference signal RSx in the existing solution and the reference signals RS1, RS2, and RS3 occupy the same number of resources (both being 240 REs) in the present application. Because equivalent subcarrier spacings Δf' of RSx and RS1 are both 2Δf, the existing solution and the solution of the present application correspond to the same maximum ranging range, both being $$R_{max} = \frac{c}{2\Delta f'} = \frac{c}{4\Delta f}$$ . As can be learned from the simulation results in Fig. 9, with the same number of sensing frequency-domain resources of the occupied reference signal and the same maximum ranging range, the solution of the present application has reduced the ranging errors by approximately 60% compared with the existing solution.

The present application provides in some embodiments a transmitting device. Fig. 10 is a schematic structural diagram of a transmitting device according to an embodiment of the present application. As shown in Fig. 10, in the embodiments of the present application, the transmitting device includes:

> a signal configuration module 301, configured to configure a first reference signal, where among frequency-domain resources occupied by the first reference signal, a spacing between at least one group of adjacent resource units is different from a spacing between other adjacent resource units; and
> a first communication module 302, configured to transmit the first reference signal to a to-be-sensed target.

In an embodiment of the present application, the signal configuration module 301 is further configured to configure N sub-signals or configure N resources from a resource set of the first reference signal to constitute the first reference signal, where N is a natural number greater than 1,

where among the N sub-signals/resources constituting the first reference signal, at least one of the following characteristics is present:

> different comb values;
> different starting positions; or
> different lengths.

In an embodiment of the present application, the signal configuration module 301 is further configured to: generate a long reference signal sequence, and truncate N segments from the long reference signal sequence; and map different segments in the N segments to different sub-signals/resources in the N sub-signals/resources; or generate N reference signal sequences with different sequence parameters; and map different reference signal sequences in the N reference signal sequences to different sub-signals/resources in the N sub-signals/resources.

In an embodiment of the present application, the first communication module 302 is further configured to transmit the N sub-signals/resources within the same time unit.

In an embodiment of the present application, the N sub-signals/resources are separated or interleaved in the frequency domain.

In an embodiment of the present application, the first communication module 302 is further configured to transmit first information to a receiving device,

where the first information includes at least one of the following information:

> an identifier indicating a configuration manner of the first reference signal;
> an initialization parameter used for configuring a reference signal sequence generated for the first reference signal; or
> at least one of time-domain resource information of the first reference signal, frequency-domain resource information of the first reference signal, or generation information of the reference signal sequence.

In an embodiment of the present application, the signal configuration module 301 is further configured to configure the first reference signal in a case that second information meets a preset condition,

where the second information includes at least one of the following information:

> an initial sensing result of the to-be-sensed target determined using a second reference signal;
> a sensing requirement with respect to the to-be-sensed target; or
> whether a time-frequency resource configuration of the second reference signal meets the sensing requirement.

In an embodiment of the present application, the first communication module 302 is further configured to: transmit the second reference signal to the to-be-sensed target, and transmit the time-frequency resource configuration of the second reference signal to a receiving device to determine the second information through the receiving device; and receive the second information transmitted by the receiving device.

In an embodiment of the present application, the first communication module 302 is further configured to transmit a time-frequency resource configuration of the first reference signal to an adjacent device to enable the adjacent device to perform signal transmission on orthogonal resources.

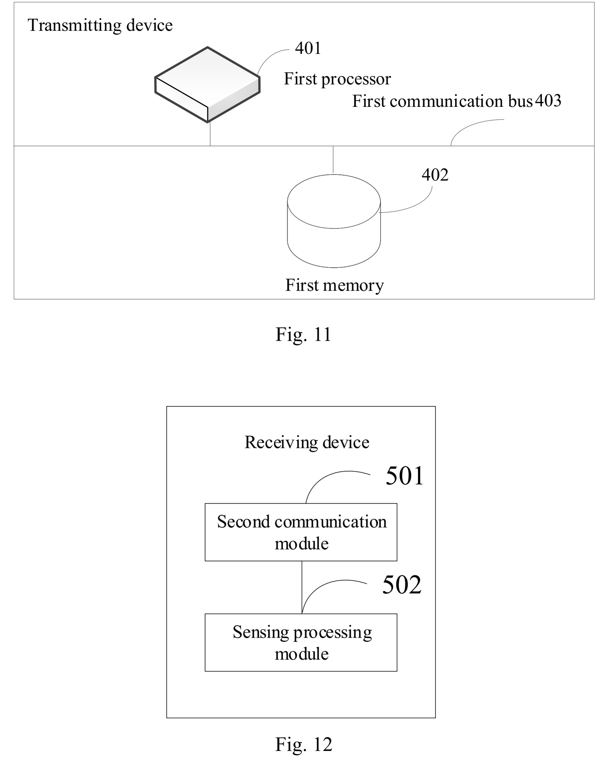

Fig. 11 is another schematic structural diagram of a transmitting device according to an embodiment of the present application. As shown in Fig. 11, in the embodiments of the present application, the transmitting device includes a first processor 401, a first memory 402, and a first communication bus 403,

where the first communication bus 403 is configured to implement a communication connection between the first processor 401 and the first memory 402; and the first processor 401 is configured to perform one or more computer programs stored in the first memory 402 to implement the foregoing target sensing method applied to the transmitting device.

The present application provides in some embodiments a receiving device. Fig. 12 is a schematic structural diagram of a receiving device according to an embodiment of the present application. As shown in Fig. 12, in the embodiments of the present application, the receiving device includes:

a second communication module 501, configured to receive a first sensing signal, where the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units; and
a sensing processing module 502, configured to perform sensing processing on the first sensing signal to determine a target sensing result of the to-be-sensed target.

In an embodiment of the present application, in a case that the receiving device is the to-be-sensed target, the first sensing signal is the first reference signal; and
in a case that the receiving device is different from the to-be-sensed target, the first sensing signal is an echo signal formed by reflection of the first reference signal by the to-be-sensed target.

In an embodiment of the present application, the first reference signal is constituted by N sub-signals/-resources; and
where among the N sub-signals/resources, at least one of the following characteristics is present:

different comb values;
different starting positions; or
different lengths.

In an embodiment of the present application, the second communication module 501 is further configured to receive first information transmitted by the transmitting device,
where the first information includes at least one of the following information:

an identifier indicating a configuration manner of the first reference signal;
an initialization parameter used for configuring a reference signal sequence generated for the first reference signal; or
at least one of time-domain resource information of the first reference signal, frequency-domain resource information of the first reference signal, or generation information of the reference signal sequence.

In an embodiment of the present application, the sensing processing module 502 is further configured to determine a sensing processing manner using the first information; and perform the sensing processing on the first sensing signal based on the determined sensing processing manner to obtain the target sensing result.

In an embodiment of the present application, the second communication module 501 is further configured to transmit second information to the transmitting device for the transmitting device to configure the first reference signal in a case that the second information meets a preset condition,
where the second information includes at least one of the following information:

an initial sensing result of the to-be-sensed target determined using a second reference signal;
a sensing requirement with respect to the to-be-sensed target; or
whether a time-frequency resource configuration of the second reference signal meets the sensing requirement.

In an embodiment of the present application, the second communication module 501 is further configured to receive a second sensing signal that originates from the second reference signal and the time-frequency resource configuration of the second reference signal transmitted by the transmitting device, where the second reference signal is transmitted by the transmitting device to the to-be-sensed target;

the sensing processing module 502 is further configured to: perform sensing processing on the second sensing signal to determine the initial sensing result of the to-be-sensed target; and determine the second information based on the initial sensing result and the time-frequency resource configuration of the second reference signal.

In an embodiment of the present application, in a case that the receiving device is the to-be-sensed target, the second sensing signal is the second reference signal; and

in a case that the receiving device is different from the to-be-sensed target, the second sensing signal is an echo signal formed by reflection of the second reference signal by the to-be-sensed target.

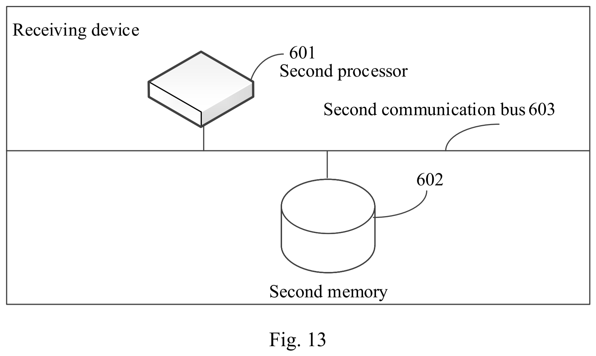

Fig. 13 is another schematic structural diagram of a receiving device according to an embodiment of the present application. As shown in Fig. 13, in an embodiment of the present application, the receiving device includes a second processor 601, a second memory 602, and a second communication bus 603,

where the second communication bus 603 is configured to implement a communication connection between the second processor 601 and the second memory 602; and

the second processor 601 is configured to perform one or more computer programs stored in the second memory 602 to implement the foregoing target sensing method applied to the receiving device.

The present application provides in some embodiments a computer-readable storage medium, having a computer program stored therein, where the computer program, when executed by a processor, implements the foregoing target sensing method. The computer-readable storage medium may be a volatile memory, for example, a random access memory (RAM); or a non-volatile memory, for example, a read-only memory (ROM), a flash memory, a hard disk drive (HDD), or a solid-state drive (SSD); or may be various devices including any one or any combination of the foregoing memories, for example, a mobile terminal, a computer, a tablet device, a personal digital assistant, or the like.

Persons skilled in the art should understand that the embodiments of the present application may be provided as a method, a system, or a computer program product. Therefore, the present application may use a form of a hardware embodiment, a software embodiment, or an embodiment with a combination of software and hardware. In addition, the present application may use a form of a computer program product implemented on one or more computer-usable storage media (including, but not limited to, a disk memory, an optical memory, and the like) that include computer-usable program code.

The present application is described with reference to the schematic implementation flowcharts and/or block diagrams of the method, the device (system), and the computer program product according to the embodiments of the present application. It should be understood that computer program instructions may be used to implement each process and/or each block in the schematic flowcharts and/or the block diagrams and a combination of a process and/or a block in the schematic implementation flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the schematic implementation flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes instructions apparatus. The instruction apparatus implements a specific function in one or more processes in the schematic implementation flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the schematic implementation flowcharts and/or in one or more blocks in the block diagrams.

The foregoing descriptions are merely specific implementations of the present application, but are not intended to limit the scope of protection of the present application. Any variation or replacement readily figured out by a person skilled in the art within the technical scope disclosed in the present application shall fall within the scope of protection of the present application. Therefore, the scope of protection of the present application shall be subject to the scope of protection of the claims.

**Claims**

1. A target sensing method, performed by a transmitting device, comprising:

configuring a first reference signal, wherein among frequency-domain resources occupied by the first reference signal, a spacing between at least one group of adjacent resource units is different from a spacing between other adjacent resource units; and
transmitting the first reference signal to a to-be-sensed target.

2. The method according to claim 1, wherein the configuring the first reference signal comprises:

configuring N sub-signals, or configuring N resources from a resource set of the first reference signal, to constitute the first reference signal, wherein N is a natural number greater than 1, wherein among the N sub-signals/resources constituting the first reference signal, at least one of the following characteristics is present:

different comb values;
different starting positions; or
different lengths.

3. The method according to claim 2, wherein the configuring the N sub-signals or configuring the N resources from the resource set of the first reference signal comprises:

generating a long reference signal sequence, and truncating the long reference signal sequence to obtain N segments; and
mapping different segments in the N segments to different sub-signals/resources in the N sub-signals/resources; or
generating N reference signal sequences with different sequence parameters; and
mapping different reference signal sequences in the N reference signal sequences to different sub-signals/resources in the N sub-signals/resources.

4. The method according to claim 2, wherein the transmitting the first reference signal to the to-be-sensed target comprises:
transmitting the N sub-signals/resources within the same time unit.

5. The method according to claim 2, wherein the N sub-signals/resources are separated or interleaved in the frequency domain.

6. The method according to claim 1, wherein the method further comprises:

transmitting first information to a receiving device,
wherein the first information comprises at least one of the following information:

an identifier indicating a configuration manner of the first reference signal;
an initialization parameter used for configuring a reference signal sequence generated for the first reference signal; or
at least one of time-domain resource information of the first reference signal, frequency-domain resource information of the first reference signal, or generation information of the reference signal sequence.

7. The method according to claim 1, wherein the method further comprises:

configuring the first reference signal in a case that second information meets a preset condition,
wherein the second information comprises at least one of the following information:

an initial sensing result of the to-be-sensed target determined using a second reference signal;
a sensing requirement with respect to the to-be-sensed target; or
whether a time-frequency resource configuration of the second reference signal meets the sensing requirement.

8. The method according to claim 7, wherein the method further comprises:

transmitting the second reference signal to the to-be-sensed target, and transmitting the time-frequency resource configuration of the second reference signal to a receiving device; and
receiving the second information transmitted by the receiving device.

9. The method according to claim 1, wherein the method further comprises:
transmitting a time-frequency resource configuration of the first reference signal to an adjacent device to enable the adjacent device to perform signal transmission on orthogonal resources.

10. A target sensing method, performed by a receiving device, comprising:

receiving a first sensing signal, wherein the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units; and
performing sensing processing on the first sensing signal to determine a target sensing result of the to-be-sensed target.

11. The method according to claim 10, wherein

in a case that the receiving device is the to-be-sensed target, the first sensing signal is the first reference signal; and
in a case that the receiving device is different from the to-be-sensed target, the first sensing signal is an echo signal formed by reflection of the first reference signal by the to-be-sensed target.

12. The method according to claim 10, wherein the first reference signal is constituted by N sub-signals/resources; and
wherein among the N sub-signals/resources, at least one of the following characteristics is present:

different comb values;
different starting positions; or
different lengths.

13. The method according to claim 10, wherein the method further comprises:

receiving first information transmitted by the transmitting device,
wherein the first information comprises at least one of the following information:

an identifier indicating a configuration manner of the first reference signal;
an initialization parameter used for configuring a reference signal sequence generated for the first reference signal; or
at least one of time-domain resource information of the first reference signal, frequency-domain resource information of the first reference signal, or generation information of the reference signal sequence.

14. The method according to claim 13, wherein the performing the sensing processing on the first sensing signal to determine the target sensing result of the to-be-sensed target comprises:

determining a sensing processing manner using the first information; and
performing the sensing processing on the first sensing signal based on the determined sensing processing manner to obtain the target sensing result.

15. The method according to claim 10, wherein the method further comprises:

transmitting second information to the transmitting device for the transmitting device to configure the first reference signal in a case that the second information meets a preset condition, wherein the second information comprises at least one of the following information:

an initial sensing result of the to-be-sensed target determined using a second reference signal;
a sensing requirement with respect to the to-be-sensed target; or
whether a time-frequency resource configuration of the second reference signal meets the sensing requirement.

16. The method according to claim 15, wherein the method further comprises:

receiving a second sensing signal that originates from the second reference signal and the time-frequency resource configuration of the second reference signal transmitted by the transmitting device, wherein the second reference signal is transmitted by the transmitting device to the to-be-sensed target;
performing sensing processing on the second sensing signal to determine the initial sensing result of the to-be-sensed target; and
determining the second information based on the initial sensing result and the time-frequency resource configuration of the second reference signal.

17. The method according to claim 16, wherein

in a case that the receiving device is the to-be-sensed target, the second sensing signal is the second reference signal; and
in a case that the receiving device is different from the to-be-sensed target, the second sensing signal is an echo signal formed by reflection of the second reference signal by the to-be-sensed target.

18. A transmitting device, comprising:

a signal configuration module, configured to configure a first reference signal, wherein among frequency-domain resources occupied by the first reference signal, a spacing between at least one group of adjacent resource units is different from a spacing between other adjacent resource units; and
a first communication module, configured to transmit the first reference signal to a to-be-sensed target.

**19.** A receiving device, comprising:

a second communication module, configured to receive a first sensing signal, wherein the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units; and a sensing processing module, configured to perform sensing processing on the first sensing signal to determine a target sensing result of the to-be-sensed target.

**20.** A transmitting device, comprising: a first processor, a first memory, and a first communication bus,

wherein the first communication bus is configured to implement a communication connection between the first processor and the first memory; and the first processor is configured to perform one or more computer programs stored in the first memory to implement the target sensing method according to any one of claims 1 to 9.

**21.** A receiving device, comprising: a second processor, a second memory, and a second communication bus,

wherein the second communication bus is configured to implement a communication connection between the second processor and the second memory; and the second processor is configured to perform one or more computer programs stored in the second memory to implement the target sensing method according to any one of claims 10 to 17.

**22.** A computer-readable storage medium, having a computer program stored therein, wherein the computer program, when executed by a processor, implements the target sensing method according to any one of claims 1 to 17.

Configuring a first reference signal, where among frequency-domain resources occupied by the first reference signal, a spacing between at least one group of adjacent resource units is different from a spacing between other adjacent resource units

~S101

Transmitting the first reference signal to a to-be-sensed target

~S102

Fig. 1

Frequency domain

RS1 symbol 1
RS2 symbol 2

Time domain

Fig. 2

Receiving a first sensing signal, where the first sensing signal originates from a first reference signal transmitted to a to-be-sensed target by a transmitting device, and among frequency-domain resources occupied by the first reference signal, a spacing between at least one group of adjacent resource units is different from a spacing between other adjacent resource units

~S201

Performing sensing processing on the first sensing signal to determine a target sensing result of the to-be-sensed target

~S202

Fig. 3

Second base
station

First base
station

First
terminal

S1. The first base station
transmits RS0 (first step)

S1. The first terminal
performs sensing
measurement (second step)

S2. The first terminal transmits
information [3, 500], and
reports an initial sensing result

S3. The first base station selects
Configuration 3 based on the information [3,
500]

S4. The first base station transmits
information [seed1, seed2, freq_info]

S5. The first base station transmits time-
frequency resource configurations of
signals RS1, RS2, and RS3

S6. The first terminal receives the
signals RS1, RS2, and RS3, and
performs sensing processing based on
the information [seed1, seed2,
freq_info]

Fig. 4

Frequency
domain

Time
domain

RB0 to RB29
occupy 60 REs

... 

RB30 to RB49
occupy 120 REs

...

RB50 to RB79
occupy 60 REs

Fig. 5

Frequency
domain

Time
domain

Fig. 6

18

Frequency
domain

Time
domain

Fig. 7

RSx
RB0 to RB39
occupy 240 REs

RS1
RB0 to RB29
occupy 60 REs

RS2
RB30 to RB49
occupy 120 REs

RS3
RB50 to RB79
occupy 60 REs

Frequency domain

Fig. 8

Fig. 9

Fig. 10

Transmitting device

401

First processor

First communication bus 403

402

First memory

Fig. 11

Receiving device

501

Second communication module

502

Sensing processing module

Fig. 12

Receiving device

601
Second processor

Second communication bus 603

602

Second memory

Fig. 13

## INTERNATIONAL SEARCH REPORT

| International application No. |
| --- |
| **PCT/CN2024/072083** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

    IPC: H04W

Documentation searched other than minimum documentation to the extent that such documents are included in the fields searched

Electronic data base consulted during the international search (name of data base and, where practicable, search terms used)

    CJFD, CNTXT, ENTXTC, IEEE: 不等, 不同, 不相同, 不一样, 参考, 分辨率, 感知, 间隔, 精度, 精确, 距离, 信号, 资源, 子载波, unequal, different, reference, resolution, perception, sense, gap, precision, distance, signal, resource, subcarrier

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116614335 A (UNIVERSITY OF ELECTRONIC SCIENCE AND TECHNOLOGY OF CHINA) 18 August 2023 (2023-08-18) description, paragraphs 0003-0039 | 1-22 |
| A | CN 115604728 A (VIVO MOBILE COMMUNICATION CO., LTD.) 13 January 2023 (2023-01-13) description, paragraphs 0179-0536 and 0541-0723 | 1-22 |
| A | CN 112751798 A (SHANGHAI JIAO TONG UNIVERSITY) 04 May 2021 (2021-05-04) entire document | 1-22 |
| A | CN 113364718 A (BEIJING UNIVERSITY OF POSTS AND TELECOMMUNICATIONS) 07 September 2021 (2021-09-07) entire document | 1-22 |
| A | WO 2022268104 A1 (HUAWEI TECHNOLOGIES CO., LTD.) 29 December 2022 (2022-12-29) entire document | 1-22 |

✓ Further documents are listed in the continuation of Box C.     ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 March 2024** | **21 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/072083** |

### C. DOCUMENTS CONSIDERED TO BE RELEVANT

| Category* | Citation of document, with indication, where appropriate, of the relevant passages | Relevant to claim No. |
| --- | --- | --- |
| A | HAN, Jiarong et al. "A Multiple Access Method for Integrated Sensing and Communication Enabled UAV Ad Hoc Network" *2022 IEEE Wireless Communications and Networking Conference (WCNC),* 16 May 2022 (2022-05-16), entire document | 1-22 |

## INTERNATIONAL SEARCH REPORT
### Information on patent family members

International application No.

**PCT/CN2024/072083**

| Patent document cited in search report | | | Publication date (day/month/year) | Patent family member(s) | | | Publication date (day/month/year) |
|---|---|---|---|---|---|---|---|
| CN | 116614335 | A | 18 August 2023 | None | | | |
| CN | 115604728 | A | 13 January 2023 | WO | 2023274029 | A1 | 05 January 2023 |
| CN | 112751798 | A | 04 May 2021 | None | | | |
| CN | 113364718 | A | 07 September 2021 | WO | 2022246998 | A1 | 01 December 2022 |
| | | | | US | 2023288528 | A1 | 14 September 2023 |
| WO | 2022268104 | A1 | 29 December 2022 | CN | 115515175 | A | 23 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310124895